# FASCICULE DE BREVET EUROPEEN

(11) **EP 3 478 222 B1**
(45) Date de publication et mention de la délivrance du brevet: **27.10.2021**
(21) Numéro de dépôt: 17745418.8
(22) Date de dépôt: 30.06.2017
(51) Int. Cl.: A61C 13/271

(54) **PROCÉDÉ DE FABRICATION D'UNE PROTHÈSE DENTAIRE PARTIELLE AMOVIBLE PAR MOULAGE À L'AIDE D'UN MOULE RÉALISÉ EN FABRICATION ADDITIVE**
VERFAHREN ZUR HERSTELLUNG EINES HERAUSNEHMBAREN PARTIELLEN ZAHNERSATZES DURCH FORMUNG MITHILFE EINER DURCH GENERATIVE FERTIGUNG HERGESTELLTEN FORM
METHOD FOR MANUFACTURE OF A REMOVABLE PARTIAL DENTAL PROSTHESIS BY MOULDING WITH THE AID OF A MOULD FORMED BY ADDITIVE MANUFACTURE

(30) Priorité: 30.06.2016 FR 1656228
(43) Date de publication de la demande: 08.05.2019
(73) Titulaire: CIRCLE CENTRALE DE REFERENCEMENT, 13300 Salon de Provence (FR)
(72) Inventeur: FOREST, Alexandre, 30127 Bellegarde (FR)
(74) Mandataire: Santarelli
(86) Numéro de dépôt international: PCT/FR2017/051782
(87) Numéro de publication internationale: WO 2018/002562

(56) Documents cités:
- EP-A1- 1 240 878
- EP-A1- 2 465 465
- WO-A1-2014/053549
- WO-A1-2015/120010
- WO-A1-2015/181565
- CN-A- 101 548 911
- JP-A- 2000 333 972
- US-A- 3 192 583
- US-B1- 7 153 135

## Description

La présente demande concerne un procédé de fabrication d'une prothèse dentaire partielle amovible à l'aide d'un moule réalisé au moins en partie en fabrication additive.

Elle concerne plus particulièrement un procédé de fabrication d'une prothèse dentaire partielle amovible par moulage.

Une prothèse dentaire est un appareil de remplacement d'au moins certaines des dents naturelles.

Une prothèse amovible est une prothèse qui peut être retirée de la bouche par exemple pour son entretien quotidien ou tout simplement pour dormir mais aussi par dévissage d'implant.

On parle de prothèse complète amovible, ou de dentier, lorsque la prothèse remplace la totalité des dents, que ce soit de la mâchoire supérieure pour un dentier du haut ou de la mâchoire inférieure pour un dentier du bas.

On parle de prothèse partielle amovible, lorsqu'il ne s'agit que de remplacer une ou plusieurs dents.

Une prothèse partielle amovible comprend par exemple une barre (ou structure) de soutien (tel un châssis) et une partie en résine typiquement de résine acrylique (gencive et dent(s)). Un châssis métallique, ou stellite, peut ainsi servir à soutenir les dents artificielles qui se positionnent à l'emplacement des édentations. Cette pièce à base métallique (usuellement à base de chrome -cobalt - molybdène), rigide, s'appuie à la fois sur les dents restantes et sur les muqueuses, principalement les gencives.

La prothèse partielle amovible peut également être un bridge (ou pont dentaire), consistant en une ou plusieurs dents artificielles suspendues et reliées à des dents restantes ou piliers. Dans ce cas, la barre de soutien est en métal, en céramique, en mélange de métal et de céramique ou en résine composite.

Une prothèse amovible peut également être maintenue en place dans la bouche par au moins un implant. Un implant est un élément métallique, possiblement fixé via une vis, dans l'os, afin de remplacer la racine dentaire d'une dent. Le métal utilisé actuellement est le plus souvent du titane. Le nombre d'implants placés en bouche est variable selon la taille de ladite prothèse. La présence de plusieurs implants nécessite le plus souvent la présence d'une barre de rétention qui s'appuie sur les implants, la prothèse elle-même étant alors fixée à la barre de rétention le plus souvent par au moins un moyen de fixation.

La fabrication de prothèses dentaires amovibles nécessite la mise en oeuvre d'un protocole comprenant une succession d'étapes de grande précision, parmi lesquelles : prise d'empreinte primaire avec analyse des contours gingivaux, prise d'empreinte secondaire (ou reprise). Au moins deux empreintes sont nécessaires pour enregistrer de façon très précise la position de la gencive, de la langue, des lèvres et des joues. Ces étapes sont obligatoires avant d'arriver à l'étape de la coulée du monomère (qui formera la résine de la prothèse) dans un moule en plâtre, dans lequel des dents artificielles ont été préalablement disposées ou bien sont collées par la suite.

Ce sont des étapes chronophages qui retardent considérablement la réalisation effective de la prothèse. Ainsi, il faut typiquement effectuer au moins cinq séances cliniques avant la pose d'une prothèse amovible totale, comprenant au moins par exemple la prise des empreintes primaire et secondaire, le rapport intermaxillaire, l'essayage du montage en cire, la vérification de l'occlusion et l'équilibration.

En outre, une fois la prothèse en place, si un problème apparaît, il faut le plus souvent reprendre l'empreinte secondaire pour faire les corrections nécessaires.

Par conséquent, la fabrication de prothèses dentaires amovibles est un processus long, lourd et rébarbatif qui rebute nombre de prothésistes dentaires.

Le document JP 2000 333972 décrit par exemple un élément de renfort dentaire en métal en forme de peigne courbé en U divergent sur lequel est appliqué une couche de liaison métal-résine afin de renforcer l'assemblage avec une résine qui est ensuite appliquée sur sa surface.

Le document WO 2014/053549 décrit par exemple un procédé de réalisation d'un moule de prothèse dentaire complète et d'une prothèse dentaire, les dents étant également fabriquées. Le moule peut être en acrylique, et fabriqué en fabrication additive.

Le document EP 2 465 465 décrit la réalisation d'un moule de prothèse dentaire complète, par fabrication additive. La prothèse est réalisée par injection de résine dans le moule. Les deux demi-coquilles formant le moule sont positionnées par deux tiges et un composant de référence tel un cube.

Le document CN 101548911 décrit un procédé de réalisation d'un moule de prothèse dentaire complète et d'une prothèse dentaire, où le moule peut être fabriqué en fabrication additive.

L'objet de la présente demande vise donc à proposer un procédé amélioré, en particulier en termes de gain de temps et de facilité de fabrication, dans un contexte d'automatisation voire d'industrialisation, d'au moins une prothèse dentaire partielle amovible.

A cet effet, l'invention concerne, sous un premier aspect, un procédé de fabrication d'une prothèse dentaire partielle amovible par moulage, ledit procédé comprenant les étapes successives suivantes :
- une étape de modélisation numérique d'un modèle de prothèse partielle, le modèle de prothèse partielle représentant la prothèse partielle à réaliser et comportant une partie gencive et une partie dents ;
- une étape de réalisation d'un moule de prothèse partielle à partir du modèle de prothèse partielle, ledit moule comprenant deux demi-coquilles, une demi-coquille inférieure comportant une empreinte de la partie dents de la prothèse à réaliser, et une demi-coquille supérieure comportant une empreinte de la partie gencive de la prothèse à réaliser et une empreinte de dents existantes, la partie gencive et la partie dents de la prothèse à réaliser étant chacune partielles, les deux demi-coquilles étant configurées pour être assemblées par accolement l'une à l'autre, les empreintes de chaque demi-coquille formant par assemblage une empreinte de la prothèse à réaliser, le moule comprenant au moins un organe de positionnement d'une demi-coquille par rapport à l'autre demi-coquille, l'organe de positionnement comprenant au moins un organe support, formé dans la demi-coquille inférieure, destiné à supporter l'une empreinte des dents existantes de la demi-coquille supérieure, l'organe de positionnement consistant en une complémentarité de l'empreinte de la partie gencive et des dents existantes de la demi-coquille supérieure et de l'empreinte de la partie dents et de l'organe de support de la demi-coquille inférieure ;
l'étape de réalisation d'un moule comprenant :
- une sous-étape de modélisation numérique au moins partielle d'un modèle de moule en fonction du modèle de prothèse partielle,
- suivie d'une sous-étape de fabrication additive d'au moins la demi-coquille inférieure du moule en fonction du modèle de moule, et
- une étape de réalisation de la prothèse partielle comprenant successivement au moins : une sous-étape de fourniture d'au moins une dent artificielle, une sous-étape de positionnement de la dent artificielle dans un logement de la demi-coquille inférieure, une sous-étape d'assemblage du moule et une sous-étape de coulée d'un matériau de remplissage dans le moule.

Par « coquille », on entend selon l'invention un ensemble composé de deux parties, ou demi-coquilles, qui servent à faire le moule. Selon l'invention, au moins une des deux demi-coquilles est réalisée par fabrication additive. Les qualificatifs « inférieur » et « supérieur » sont ici arbitraires de sorte à identifier facilement chaque demi-coquille.

Par « fabrication additive », on entend selon l'invention un procédé de fabrication d'ajout de matière, la plupart du temps assisté par ordinateur. Elle est définie par l'organisme de normalisation ASTM comme étant un procédé de mise en forme d'une pièce par ajout de matière, par empilement de couches successives, en opposition aux procédés par retrait de matière, tel que l'usinage. C'est également le nom donné à la technologie d'Impression tridimensionnelle (impression 3D).

Le procédé de fabrication d'une prothèse dentaire amovible selon l'invention, comprenant la réalisation d'un moule au moins partiellement par fabrication additive, est avantageusement facile et rapide. De plus, la précision des techniques de fabrication additive permet une adéquation parfaite, beaucoup plus précise que par les méthodes habituelles, de la prothèse à l'environnement dans lequel elle est destinée à être insérée.

La demi-coquille supérieure est réalisée soit, de préférence, par fabrication additive, soit par un autre procédé tel qu'un moulage en plâtre. Dans ce dernier cas, la demi-coquille peut être pleine.

Selon un mode de réalisation, l'étape de réalisation du moule est telle que la sous-étape de modélisation numérique réalise un modèle du moule partiel, i.e. concernant uniquement la demi-coquille inférieure, en fonction du modèle de prothèse, et la sous-étape de fabrication additive réalise la fabrication de ce moule partiel en fonction du modèle de moule. Cependant ce mode de réalisation n'est pas préféré.

Selon un mode de réalisation, préféré, l'étape de réalisation du moule est telle que la sous-étape de modélisation numérique réalise un modèle du moule complet en fonction du modèle de prothèse, et la sous-étape de fabrication additive réalise la fabrication de tout le moule en fonction du modèle de moule. Cela correspond au cas où la demi-coquille supérieure est également réalisée par fabrication additive. Mais il est également possible que la demi-coquille inférieure soit réalisée par fabrication additive et que la demi-coquille supérieure soit réalisée par une technique plus conventionnelle, par exemple au moyen d'un moule en plâtre.

Selon l'invention, l'organe de positionnement est réalisé au moins par la complémentarité de l'empreinte de la partie dents de la prothèse à réaliser et de l'empreinte de la partie gencive de la prothèse à réaliser, de façon à réaliser un assemblage par accolement, mais il sert également et de préférence à maintenir, au moins transversalement, les deux demi-coquilles l'une par rapport à l'autre. En outre, de façon encore plus préférée, l'organe de positionnement sert à assurer une étanchéité entre les deux demi-coquilles du moule, de façon à faciliter la coulée par le matériau de remplissage et à simplifier le travail de finition éventuel.

Le positionnement de dent(s) artificielle(s) dans un logement de la demi-coquille inférieure réalisée par fabrication additive n'impose pas que la dent artificielle soit entièrement comprise « dans » le logement. Ce qui importe est que la dent soit positionnée/insérée au moins en partie dans ce logement car celui-ci est un support à cette dent. Le plus souvent, la dent artificielle est insérée en butée dans le logement, c'est-à-dire que ses faces occlusales sont en appui (butée en translation). Ainsi, la dent artificielle peut déborder de façon à se trouver également en partie dans l'empreinte de l'autre demi-coquille une fois le moule assemblé.

La prothèse dentaire amovible obtenue selon le procédé de l'invention est ici une prothèse partielle.

La prothèse dentaire amovible obtenue selon le procédé de l'invention peut comporter une barre (ou structure) de soutien, par exemple métallique (stellite).

Un tel stellite peut être un châssis et/ou un ensemble de crochets. Il est tout particulièrement utile dans le cas d'une prothèse partielle, typiquement pour maintenir ensemble deux parties séparées de la prothèse. Avantageusement, il est fixé dans la prothèse partielle après la coulée et sera ainsi solidaire de la prothèse dentaire.

La barre de soutien peut être insérée au moins partiellement dans la prothèse lors du moulage, ou bien être fixée sur la prothèse une fois celle-ci réalisée et démoulée. Dans le premier cas, elle est fixée dans la prothèse, généralement en « sandwich » entre les deux demi-coquilles du moule, après la coulée et fait partie de la prothèse, facilitant ainsi la fixation de celle-ci sur la mâchoire, surtout si la mâchoire comporte au moins deux implants extérieurs à la prothèse. C'est tout particulièrement le cas lorsque la prothèse dentaire est complète. Dans le second cas, différents moyens de support, telles des encoches, et/ou des espaces de fixation sont aménagés dans la prothèse, généralement dans les zones les moins techniques, de façon à pouvoir la fixer à la barre de soutien. Ces aménagements sont prévus de préférence lors de la conception assistée par ordinateur (i.e. modélisation) au moins partielle du moule, et se retrouvent dans le moule lors de sa fabrication additive. Ils sont alors présents dans la prothèse lors de sa réalisation effective. Ils peuvent également être réalisés sur la prothèse une fois celle-ci démoulée. De tels aménagements peuvent également permettre de fixer la prothèse sur au moins un implant par l'intermédiaire d'une barre de rétention si nécessaire.

La barre de soutien est de préférence incorporée au sein du moule avant l'étape de coulage, par une sous-étape de fourniture de barre de soutien suivie d'une sous-étape de positionnement de la barre de soutien dans une des demi-coquilles, l'autre demi-coquille pouvant également comporter des moyens de réception, tels des encoches et/ou des espaces, pour recevoir au moins partiellement la barre de soutien lors de l'assemblage. Ces deux sous-étapes sont effectuées avant ou après une des ou les sous-étapes de fourniture et de positionnement de dent artificielle. L'homme du métier est à même d'adapter la succession des sous-étapes précédant l'assemblage du moule de la façon la plus appropriée à la réalisation de la prothèse.

Selon un autre mode de réalisation, la prothèse destinée à être fixée en bouche avec utilisation d'au moins une barre de soutien, est destinée à permettre la fixation de la prothèse sur au moins deux implants de la mâchoire.

Selon un mode de réalisation, la prothèse est directement utilisable sans utilisation de barre de soutien et pourra par exemple être maintenue uniquement par des appuis muqueux et/ou palatins.

Selon un mode de réalisation préféré, la sous-étape de fabrication additive du moule est réalisée par au moins l'une des techniques suivantes : stéréolithographie (ou SLA, acronyme des termes anglais « *stereolithograph apparatus ») ;* traitement numérique de la lumière (ou DLP, acronyme des termes anglais « *digital light projecting* ») ; dépôt de filament fondu (ou FDM®, acronyme des termes anglais « *fused deposition modeling* ») ; procédé PolyJet®.

De préférence la sous-étape de fabrication additive du moule est réalisée par photopolymérisation, typiquement par procédé PolyJet® ou par stéréolithographie (SLA). De façon encore plus préférée la sous-étape de fabrication additive du moule est réalisée par un procédé comprenant une succession d'ajout de matériau par jet sur un support d'impression, en couche, le polymère étant solidifié par photopolymérisation après chaque jet : c'est le procédé PolyJet®.

La stéréolithographie (SLA) est une technique de fabrication additive utilisant, pour fabriquer des objets, le principe d'une photopolymérisation de monomères acrylates ou de monomères époxydes ou d'acrylonitrile butadiène styrène (ABS), avec une grande précision. Cette technique est brièvement rappelée ici. Un fichier numérique tridimensionnel, ou modèle, au format STL est généralement transmis à une imprimante de fabrication additive (ou imprimante tridimensionnelle) SLA où un logiciel réalise une découpe du modèle en plusieurs couches d'impression d'épaisseur généralement fixe. Un objet est alors imprimé à partir d'une plate-forme horizontale plongée dans un bain de liquide monomère. A cet effet, une photo-polymérisation du monomère est provoquée par un rayon de lumière laser ultraviolet, contrôlé à l'aide de déflecteurs formés de miroirs très précis. Le faisceau laser balaye la surface du monomère liquide en fonction du modèle tridimensionnel numérique transmis à l'imprimante. Une fois qu'une couche de matériau est solidifiée, c'est-à-dire qu'un balayage de la couche est réalisé, la plate-forme descend de la valeur de l'épaisseur de la couche suivante, et une nouvelle section est solidifiée. Cette opération est répétée autant de fois que nécessaire pour obtenir le volume complet de l'objet. Un post-traitement au four peut être nécessaire pour finir la polymérisation, et accroître au maximum la résistance du matériau. Avant ou après ce post-traitement, l'objet obtenu est le plus souvent nettoyé à l'aide d'un solvant.

Le traitement numérique de la lumière (ou DLP) est une technique utilisant la même technologie que celle des vidéoprojecteurs. Le principe est similaire à la SLA, mais ici, c'est la lumière qui permet de solidifier un monomère liquide (et non un laser). La lumière UV (ultraviolet) générée par un appareil adéquat est réfléchie par une matrice composée de très nombreux miroirs orientables et projette une image correspondant à la forme de la couche imprimée. La lumière vient frapper le monomère qui se trouve dans un bac pour le solidifier. Le traitement se fait couche par couche, comme pour la SLA.

Le dépôt de filament fondu (FDM®, de la société Stratasys) est un procédé qui permet d'utiliser une grande variété de matériaux et de couleurs. Le principe est que le matériau, le plus souvent présenté sous forme de bobines, passe à travers une buse d'extrusion chauffée entre 170 et 260°C. Ce matériau fond et se dépose sur un support, appelé plateau d'impression, par couche dont la finesse varie en fonction de la nature du matériau et des réglages. Il est typiquement de 0,02 mm. Une fois une première couche terminée, le plateau d'impression descend pour recevoir une seconde couche et ainsi de suite. Le plateau d'impression peut également, selon une variante, être chauffé pour pallier la déformation du choc thermique subi par le plastique car celui-ci passe de plus de 200°C à la température ambiante quasi instantanément. Selon une variante, au moins deux buses d'extrusion sont présentes, ce qui permet d'imprimer un objet dans au moins deux couleurs différentes ou au moins deux matériaux différents.

Comme indiqué ci-dessus, le procédé dit PolyJet® (de la société Objet) est un procédé de photopolymérisation, tout comme la SLA. Le principe est que des jets de matériau sont projetés sur un support d'impression, en couches définies par le logiciel d'impression. Après chaque jet, le polymère est solidifié grâce à un rayon UV.

Selon un mode de réalisation préféré, le matériau de fabrication additive est choisi dans le groupe formé par les monomères acryliques, les monomères époxydes, et l'acrylonitrile butadiène styrène (ABS). De façon encore plus préférée, le matériau de fabrication additive est un monomère acrylique tel que du méthacrylate de méthyle. C'est principalement le cas lors de l'utilisation des procédés PolyJet®, SLA et DLP.

Selon un autre mode de réalisation préféré, le matériau de fabrication additive est choisi dans le groupe formé par les polymères acide polylactique (PLA), alcool polyvinylique (PVA), acrylonitrile budadiène styrène (ABS) et téréphtalate d'éthylène (PET). C'est principalement le cas lors de l'utilisation du dépôt de filament fondu.

Selon un mode de réalisation préféré, l'étape de réalisation effective de la prothèse est précédée d'une étape de prise d'empreinte. L'étape de prise d'empreinte est bien connue de l'homme du métier. L'étape de prise d'empreinte est ainsi effectuée, soit sur un modèle en plâtre grâce à un scanner de table, soit, de préférence, directement grâce à un scanner intrabuccal.

Le matériau utilisé pour réaliser la prothèse, en particulier une partie de la prothèse représentant la gencive, est usuellement un monomère acrylique tel que du méthacrylate de méthyle.

Mais ce peut être aussi tout monomère, appelé également « résine » voire « résine dentaire » dans le langage courant des prothésistes, connu de l'homme de métier pour permettre de réaliser une prothèse. On parle souvent dans ce cas de résine auto-polymérisable. La polymérisation est réalisée de façon courante et connue de l'homme du métier. Par exemple, la polymérisation est réalisée à l'air, après ajout éventuel d'un catalyseur ou durcisseur, à température ambiante d'environ 23 °C, pendant une durée de plusieurs minutes voire dizaines de minutes. Typiquement cette durée (ou temps de prise) est de 6 à 9 minutes.

La polymérisation peut également être réalisée de façon contrôlée au moyen d'une enceinte de polymérisation sous pression, par exemple de type Palamat® elite (de la société Heraeus Kruzer) pendant plusieurs minutes, par exemple 10 minutes. Cette enceinte réalise un bain-marie, éventuellement sous pression, avec typiquement une température de l'eau à 55°C et une pression de 2 bar. L'utilisation de cet appareil est particulièrement avantageuse pour éviter la présence de bulles dans la prothèse.

Selon un mode de réalisation préféré, l'étape de réalisation effective de la prothèse est suivie d'au moins une étape de démoulage et/ou de finition.

Par « A et/ou B », on entend ici « A, ou bien B, ou bien A et B ».

Par « démoulage » on entend ici une obtention de la prothèse à partir du moule. Le démoulage peut être total ou, le plus souvent, partiel. En effet, il subsiste fréquemment des contre-dépouilles, auquel cas la ou les coquilles obtenues par fabrication additive sont cassées pour obtenir la prothèse.

Toutes les étapes de finition habituelles de la technique et bien connues du prothésiste telles que ponçage, polissage, lustrage et glaçage sont envisageables, en particulier pour que l'état de surface de la prothèse ne produise pas un contact irritant une fois insérée dans son environnement.

La prothèse dentaire partielle amovible obtenue par un procédé de fabrication selon l'invention ne fait toutefois pas partie de l'invention.

Selon un mode de réalisation, la prothèse comporte une barre de soutien, par exemple en métal (stellite), typiquement de chrome cobalt, tel qu'il est connu de la technique. Cependant une telle barre de soutien peut également être réalisée en fabrication additive, ou bien par coulée en cire perdue.

Comme indiqué ci-dessus, la prothèse peut comporter des espaces de fixation destinés à permettre sa fixation sur au moins un implant, éventuellement par l'intermédiaire d'une barre de rétention.

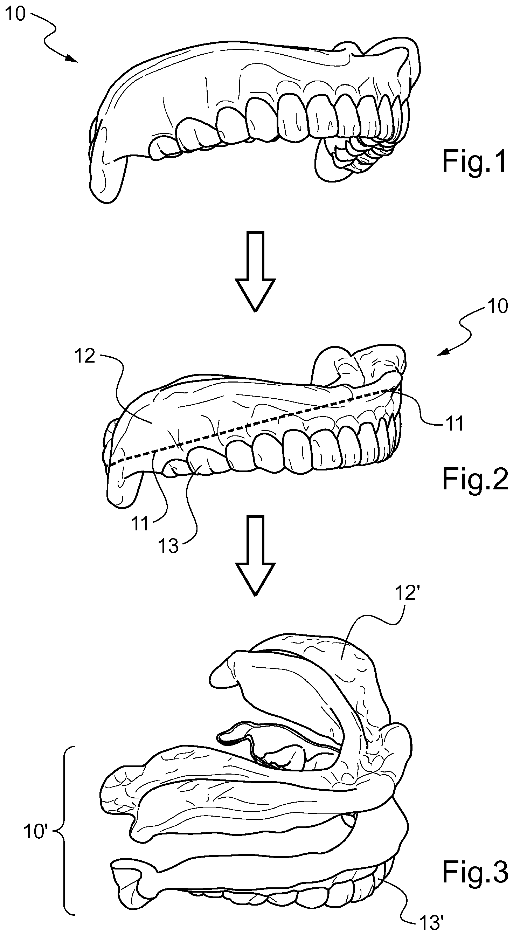

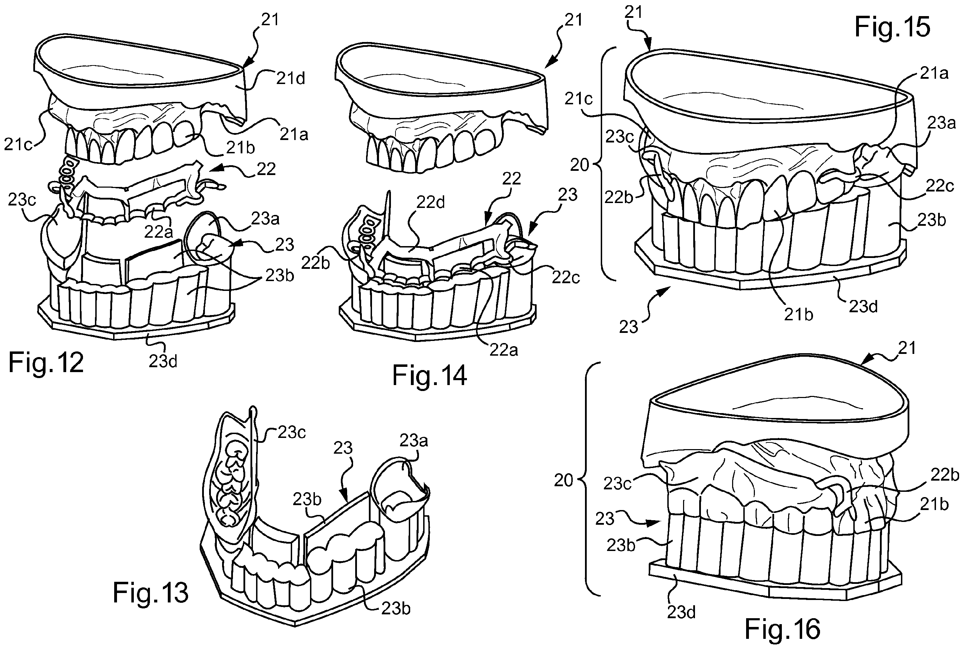

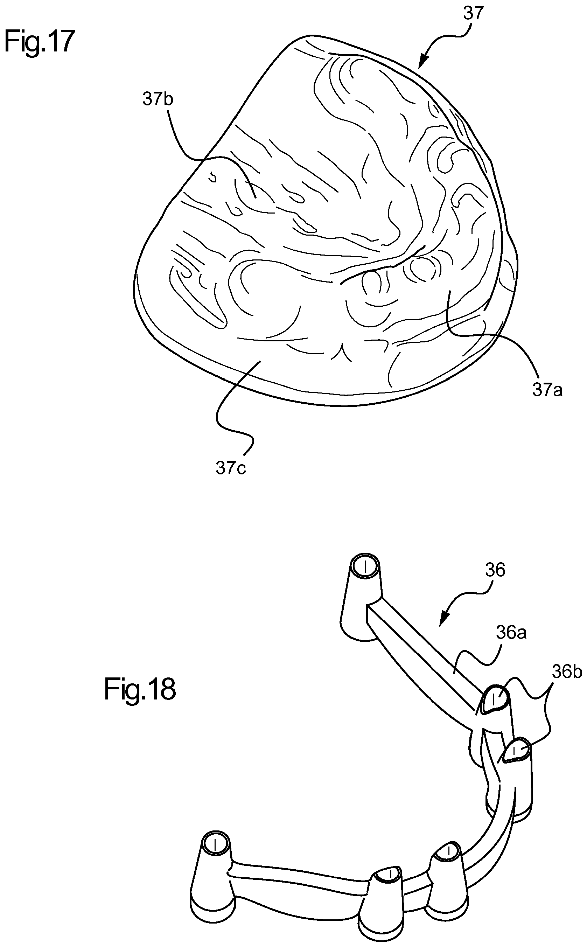

Le procédé de fabrication de prothèse dentaire amovible selon l'invention sera mieux compris à la vue de la description détaillée qui suit, donnée à titre indicatif et non limitatif, en référence aux dessins annexés illustrant trois modes de réalisation : un premier mode de réalisation illustré aux Figures 1 à 11, un deuxième mode de réalisation illustré aux Figures 12 à 16, et un troisième mode de réalisation illustré aux figures 17 à 28. Les Figures 1 à 28 se présentent comme suit :

### - Premier mode de réalisation d'une prothèse totale ne faisant pas partie de l'invention :

- La Figure 1 représente schématiquement une vue en perspective d'un modèle de prothèse dentaire, selon un premier mode de réalisation
- La Figure 2 représente schématiquement une vue en perspective du modèle de la Figure 1 dans lequel une délimitation artificielle permet une séparation en deux parties (partie dents et partie gencive);
- La Figure 3 représente schématiquement une vue en perspective du modèle des Figures 1 et 2 après la séparation en deux parties de la pièce de la Figure 2 ;
- La Figure 4 représente schématiquement une réalisation d'un modèle de demi-coquille inférieure de moule à partir de la première des deux parties de la Figure 3, en vue en perspective du dessus (Figure 4A) et du dessous (Figure 4B) ;
- La Figure 5 représente schématiquement une réalisation d'un modèle de demi-coquille supérieure de moule à partir de la seconde des deux parties de la Figure 3, en vue en perspective du dessus (Figure 5A) et du dessous (Figure 5B) ;
- La Figure 6 représente schématiquement une vue en perspective du modèle de moule réalisé par assemblage des deux modèles de demi-coquilles par accolement l'un à l'autre réalisant l'empreinte du modèle ;
- La Figure 7 représente schématiquement une vue en perspective d'une demi-coquille correspondant à la partie dents réalisée par fabrication additive à partir du modèle de première demi-coquille de la Figure 4, et représente également la sous-étape de fourniture d'au moins une dent 20 ainsi qu'une sous-étape de positionnement d'au moins une partie de cette dent 20 ;
- La Figure 8 représente schématiquement une vue en perspective de la demi-coquille correspondant à la partie gencive réalisée par fabrication additive à partir du modèle de seconde demi-coquille de la Figure 5 ;
- La Figure 9 est une vue schématique en perspective du moule constitué des demi-coquilles des Figures 7 et 8, et représente également la sous-étape de coulée de l'étape de réalisation effective de la prothèse dentaire ;
- La Figure 10 représente schématiquement une vue en perspective de l'étape de démoulage de la prothèse dentaire réalisée par le procédé de fabrication lors de la sous-étape de coulée illustrée par la Figure 9 ; et
- La Figure 11 représente schématiquement une vue en perspective de deux prothèses dentaires totales, une prothèse de mâchoire supérieure obtenue à l'issue de l'étape de la Figure 10, et une prothèse de mâchoire inférieure obtenue de façon analogue.

### - Deuxième mode de réalisation de l'invention :

- La Figure 12 représente schématiquement une vue en perspective et éclatée de trois pièces formant moule de prothèse dentaire partielle obtenu après modélisation, selon un deuxième mode de réalisation de l'invention ;
- La Figure 13 représente schématiquement en détail d'une des pièces (partie dents) du moule de prothèse dentaire de la Figure 12 ;
- La Figure 14 représente schématiquement une vue en perspective du moule de prothèse dentaire des Figures 12 et 13 après la fixation d'une pièce des trois pièces sur une autre des trois pièces ;
- La Figure 15 représente schématiquement une vue en perspective du moule après assemblage ;
- La Figure 16 représente schématiquement une autre vue en perspective, complémentaire de la Figure 15, du moule après assemblage ;

### - Troisième mode de réalisation d'une prothèse totale ne faisant pas partie de l'invention :

- La Figure 17 représente schématiquement une vue en perspective d'une première pièce (partie gencive) d'un modèle de moule de prothèse dentaire, selon un troisième mode de réalisation;
- La Figure 18 représente schématiquement une vue en perspective d'une deuxième pièce (barre de soutien) du modèle de moule de prothèse dentaire de la Figure 17 ;
- La Figure 19 représente schématiquement une vue en perspective de la première pièce et de la deuxième pièce du modèle de moule de prothèse dentaire, la deuxième pièce (barre de soutien), retravaillées ;
- La Figure 20 représente schématiquement une perspective en vue de dessus d'une troisième pièce (partie dents) du modèle de moule de prothèse dentaire des Figures 17 à 19 ;
- La Figure 21 représente schématiquement une perspective en vue de dessous de la troisième pièce de la Figure 20 retravaillée ;
- La Figure 22 représente schématiquement une vue en perspective du dessus (Figure 22A) et du dessous (Figure 22B) d'une demi-coquille inférieure correspondant à la partie gencive réalisée par fabrication additive à partir du modèle de demi-coquille des Figures 17 et 20 ;
- La Figure 23 représente schématiquement une vue en perspective du dessus (Figure 23A) et du dessous (Figure 23B) d'une demi-coquille supérieure correspondant à la partie dents réalisée par fabrication additive à partir du modèle de demi-coquille des Figures 18 et 20 ;
- La Figure 24 représente schématiquement une vue en perspective du dessus de la demi-coquille de la Figure 23 lors de la sous-étape de fourniture d'une dent artificielle 45 ainsi que lors de la sous-étape de positionnement d'une autre dent artificielle 44.
- La Figure 25 représente schématiquement une vue en perspective et éclatée de l'assemblage du moule formé des demi-coquilles des Figures 22 et 23 et d'une barre de soutien correspondant à la pièce des Figures 19 et 20 ;
- La Figure 26 représente schématiquement une vue en coupe transversale du moule après assemblage ;
- La Figure 27 représente schématiquement une vue en perspective du moule après assemblage et avant coulage de la résine ;
- La Figure 28 représente schématiquement une vue en perspective du démoulage d'une prothèse ainsi obtenue après coulage de la résine.

Sur les Figures, les éléments identiques sont identifiés par des références numériques identiques.

Le premier mode de réalisation explicite toutes les étapes du procédé selon l'invention, à l'exception de l'étape de prise d'empreinte. Le deuxième mode de réalisation n'est décrit qu'en ce qui concerne la modélisation, la fabrication et l'assemblage du moule, les étapes de coulage du matériau de remplissage dans le moule pour fabrication effective de la prothèse dentaire, puis de démoulage de la prothèse dentaire ainsi obtenue, étant transposables du premier mode de réalisation. Le troisième mode de réalisation explicite toutes les étapes du procédé selon l'invention, à l'exception de l'étape de prise d'empreinte.

### - Premier mode de réalisation de l'invention, selon un aspect non revendiqué :

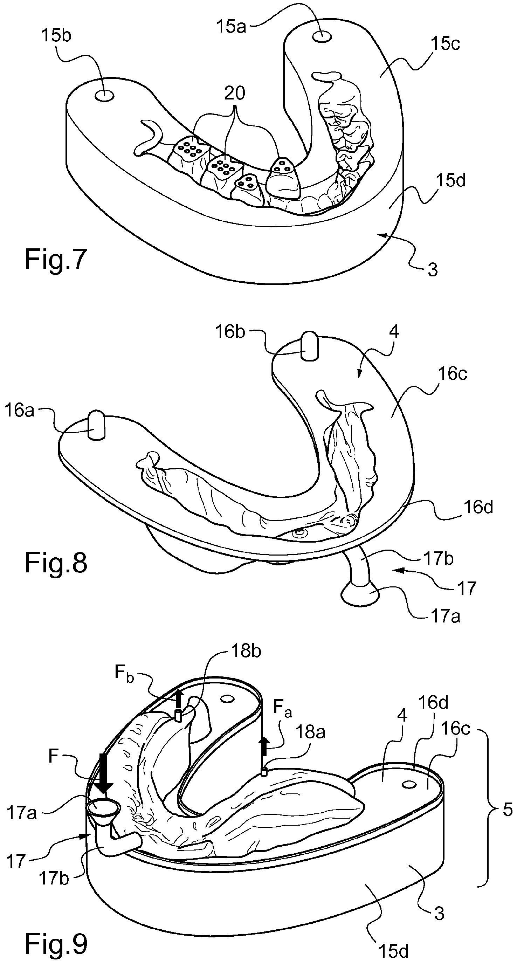

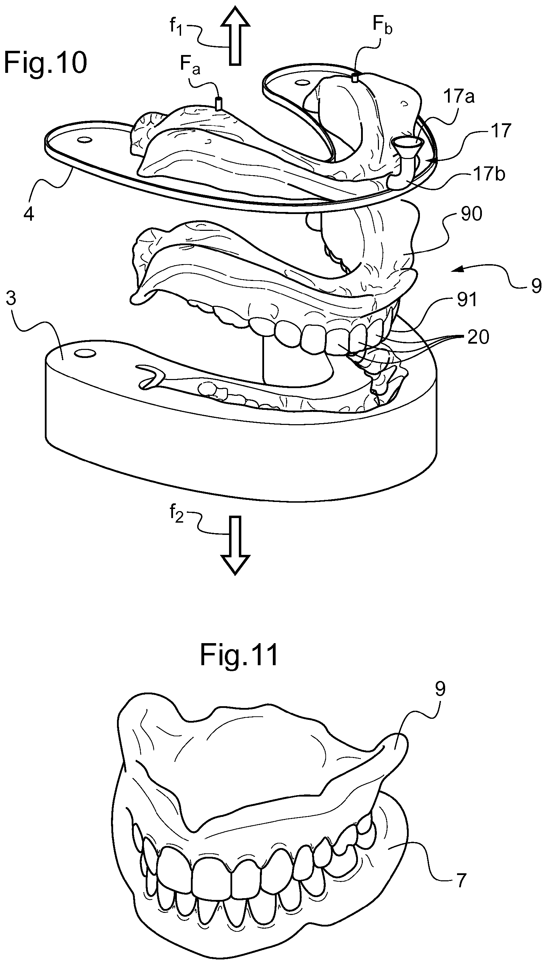

Les Figures 1 à 10 selon le premier mode de réalisation de l'invention illustrent le cas d'un procédé de fabrication d'une prothèse dentaire totale, ici de mâchoire supérieure. Les Figures 1 à 6 représentent des phases de conception assistée par ordinateur, qui génère des modèles, tandis que les Figures 7 à 10 représentent des phases de fabrication effective proprement dite, comprenant la réalisation effective par fabrication additive du moule puis la réalisation effective de la prothèse dentaire grâce au moule. La Figure 11 illustre le cas de deux prothèses dentaires totales, de mâchoire supérieure et de mâchoire inférieure, obtenues par le procédé de l'invention, la prothèse dentaire de mâchoire inférieure ayant été réalisée de la même façon que la prothèse dentaire fabriquée lors des étapes illustrées par les Figures 1 à 10.

Comme l'illustre la Figure 1, un fichier numérique représentant un modèle 10 d'une prothèse dentaire amovible tridimensionnelle a été réalisé au format STL à partir d'un logiciel de conception assistée par ordinateur (CAO), tel qu'un logiciel de type SolidWorks®, Sculpt® ou Maya®. L'empreinte tridimensionnelle du modèle 10 de la Figure 1 sera ensuite traitée par un logiciel généraliste, de type Magies®, ou par un logiciel spécifique, par exemple de type 3shapes®, Exocad® ou Dental wings®, pour y reconstituer une dentition ainsi que les profils gingivaux.

Cette étape de réalisation du modèle tridimensionnel de prothèse dentaire a été précédée d'une étape de prise d'empreinte (non illustrée) effectuée, soit sur un modèle en plâtre grâce à un scanner de table, soit, de préférence, directement grâce à un scanner intrabuccal.

Les phases suivantes, illustrées par les Figures 2 à 6, illustrent la sous-étape de modélisation tridimensionnelle du moule.

La Figure 2 représente le modèle 10 de la Figure 1, dans lequel une délimitation 11 a été effectuée, séparant ainsi le modèle en deux parties, une partie supérieure 12 dite partie gencive et une partie inférieure 13 dite partie dents.

Toute forme de délimitation peut être envisagée, si tant est que la majeure partie, voire la totalité des dents, est présente dans la partie inférieure. Selon un mode de réalisation préféré, la délimitation est réalisée sensiblement dans un plan (appelé plan de joint) ce qui facilite la manipulation tout en permettant, par la suite, de réaliser deux demi-coquilles facilement joignables l'une à l'autre selon ce plan.

La Figure 3 représente le modèle 10 de la Figure 1, après séparation de la partie supérieure ; ou partie gencive, 12, et de la partie inférieure, ou partie dents, 13, selon la délimitation 11. On obtient ainsi un modèle 10' tel que représenté, séparé en deux parties à savoir une partie gencive 12' et une partie dents 13'.

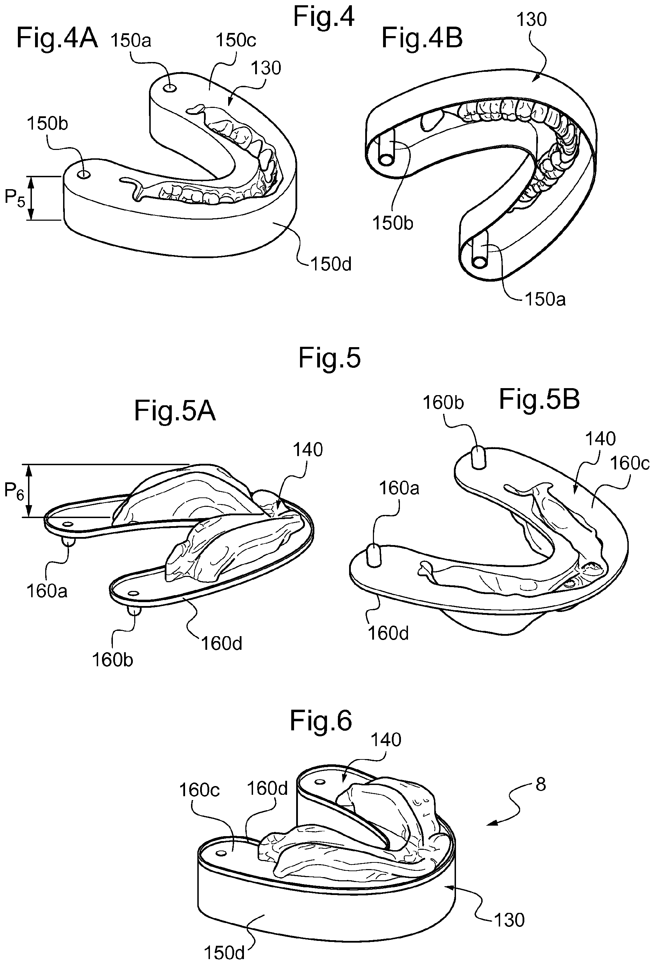

La Figure 4 représente schématiquement une réalisation d'un modèle de première demi-coquille 130 de moule correspondant à la partie dents 13' du modèle 10'. Ce modèle de première demi-coquille 130 a été réalisé en négatif de la partie 13' de la Figure 3, qui comporte ainsi un logement des dents, en vue en perspective du dessus (Figure 4A) et du dessous (Figure 4B). La surface extérieure de la partie dents 13' du modèle 10' de la Figure 3 correspond en tous points à la surface intérieure de la demi-coquille 130. La périphérie de cette surface inférieure est complétée par une paroi plane 150c en forme de U. Le modèle de première demi-coquille, ou offset, 130 est creux et s'inscrit dans un volume virtuel tridimensionnel en forme de U, délimitée par la paroi 150c, reprenant en cela sensiblement la forme d'une mâchoire supérieure.

L'épaisseur de ce modèle, ou peau, est d'environ 0,5 mm. Avantageusement, cette épaisseur est réalisée en homothétie par sur-épaisseur par rapport à la surface extérieure du modèle 10' de la Figure 3e. Cette épaisseur est constante grâce à l'utilisation de la fabrication additive, ce qui permet d'économiser de la matière. La fabrication additive est particulièrement intéressante de ce point de vue.

La profondeur Ps du U est ici de dimension supérieure ou égale à la hauteur des dents. Elle s'étend entre deux plans sensiblement parallèles, dont l'un correspond au plan de la délimitation 11 et est matérialisé par la paroi plane 150c, l'autre plan (virtuel) étant sensiblement parallèle au plan 150c. Une paroi latérale 150d relie ces deux plans sur la périphérie du U. La première demi-coquille 130 comporte deux trous de centrage 150a et 150b qui sont situés en partie arrière, c'est-à-dire sur les deux extrémités du U. Les trous de centrage 150a et 150b s'étendent en retrait depuis la paroi 150c vers l'intérieur du modèle de première demi-coquille 130. De préférence, ils sont de longueur inférieure ou égale à la profondeur du U, Ps.

La Figure 5 représente schématiquement une réalisation d'un modèle de seconde demi-coquille 140 de moule correspondant à la partie gencive 12' du modèle 10'. Ce modèle de seconde demi-coquille 140 a été réalisé en négatif de la partie 12' de la Figure 3, qui constitue ainsi une empreinte d'une partie de la gencive, en vue en perspective du dessus (Figure 5A) et du dessous (Figure 5B). La surface extérieure de la partie gencive 12' du modèle 10' de la Figure 3 correspond en tous points à la surface intérieure de la demi-coquille 140. La périphérie de cette surface inférieure est complétée par une paroi plane 160c en forme de U, configurée pour coopérer avec la paroi plane 150c de la demi-coquille 130. En périphérie de la paroi plane 160c se trouve un léger rebord 160d en forme de nervure, destiné à rigidifier la demi-coquille 140. Le modèle de seconde demi-coquille 140, ou offset, est creux et s'inscrit dans un volume virtuel tridimensionnel en forme de U, délimité par le plan 160c.

La profondeur P₆ du U est ici de dimension supérieure ou égale à la hauteur de la gencive. Elle s'étend entre deux plans sensiblement parallèles. L'un de ces plans correspond au plan de la délimitation 11 et est matérialisé par la paroi 160c, l'autre plan (virtuel) étant sensiblement parallèle à ce premier plan 160c. La seconde demi-coquille 140 comporte deux pions de centrage 160a et 160b qui sont situés en partie arrière, c'est-à-dire sur les deux extrémités du U. Les pions 160a et 160b s'étendent en saillie depuis la paroi 160c vers l'extérieur du modèle de seconde demi-coquille 140 et sont de longueur sensiblement identique à celle des trous de centrage respectifs 150a et 150b, avec lesquelles ils sont respectivement configurés pour coopérer.

La Figure 6 représente schématiquement une vue en perspective du modèle de moule 8 réalisé par assemblage des deux modèles de première et seconde demi-coquilles 130 et 140 par accolement l'un à l'autre grâce à l'insertion (virtuelle) des pions de centrage 160a et 160b dans les trous respectifs 150a et 150b. Le modèle de moule 8 réalise ainsi l'empreinte (ou le négatif) de l'offset 10'. Le moule ainsi virtuellement formé définit la forme de la mâchoire supérieure à réaliser en prothèse dentaire totale. La réalisation de ce modèle de moule 8 marque la fin de la phase CAO du procédé.

Les évents et trou(s) de coulée ne sont pas représentés sur les Figures 4 à 6 par souci de simplification mais ils sont de préférence également modélisés.

La Figure 7 représente schématiquement une vue en perspective d'une première demi-coquille 3 correspondant à la partie dents réalisée par fabrication additive, par exemple par SLA, à partir du modèle de première demi-coquille 130 de la Figure 4.

La Figure 8 représente schématiquement une vue en perspective d'une seconde demi-coquille 4 correspondant à la partie gencive réalisée par fabrication additive, par exemple par SLA, à partir du modèle de seconde demi-coquille 140 de la Figure 5.

La Figure 9 est une vue schématique en perspective du moule 5 constitué par assemblage de la première demi-coquille 3 de la figure 7 et de la seconde demi-coquille 4 de la figure 8, réalisant l'empreinte du modèle 10'.

La demi-coquille 3 comporte des trous de centrage 15a et 15b, une paroi plane en forme de U 15c à partir de laquelle se projettent la paroi latérale en forme de U 15d. Elle reprend en cela les aspects de la demi-coquille virtuelle 130 et de ses parties 150a, 150b, 150c et 150d. La demi-coquille 4 comprend deux pions de centrage 16a et 16b, une paroi plane 16c, et un rebord 16d. Elle reprend en cela les aspects de la demi-coquille virtuelle 140, et de ses parties 160a, 160b, 160c et 160d.

L'organe de positionnement de ce premier mode de réalisation est donc formé d'au moins deux pions (16a, 16b) présents sur une partie plane de paroi ou sur une paroi plane 16c, de préférence sur une paroi plane 16c, de l'une des deux demi-coquilles 4 destinés à coopérer respectivement avec au moins deux trous de centrage (15a, 15b) présents sur une partie plane de paroi ou sur une paroi plane 15c, de préférence sur une paroi plane 15c, de l'autre des demi-coquilles 3. Dans le cas représenté ici, les deux parois (15c, 16c) sont (entièrement) planes et destinées à être accolées l'une à l'autre sur toute leur surface.

Dans un mode de réalisation préféré, représenté ici, les deux parois 15c et 16c ont une forme de U. Mais elles peuvent également avoir une autre forme géométrique, du moment que ces formes coopèrent l'une avec l'autre pour un appui de positionnement. Dans un mode de réalisation préféré, indépendamment ou non du mode de réalisation précédent, la périphérie extérieure de la paroi 16c et la périphérie intérieure de la paroi 15d coïncident sensiblement lors de leur appui de positionnement.

Les évents ne sont pas représentés sur les Figures 7 et 8 par souci de simplification. Cependant, ils sont représentés sur la Figure 9.

Sur la Figure 7 sont représentées en outre des dents artificielles 20, illustrant à la fois une sous-étape de fourniture de dents 20 ainsi qu'une sous-étape de positionnement de ces dents 20 dans un logement correspondant de la première demi-coquille 3.

La première demi-coquille 3 comporte des trous 15a et 15b respectivement pour des pions de centrage 16a et 16b de la seconde demi-coquille 4.

Sur la Figure 8, on voit que la seconde demi-coquille 4 comporte un canal d'alimentation 17, également désigné par « trou de coulée» destiné à permettre la coulée d'un matériau de remplissage (qui est sous forme liquide ou sous forme de poudre) dans l'empreinte formée par les deux demi-coquilles 3, 4 assemblées. Le canal d'alimentation 17 est représenté ici comme central (par rapport à la forme de U du modèle), débouchant de préférence sur une partie de l'empreinte la moins technique possible. Il comporte un creuset d'alimentation 17a et un canal de coulée 17b débouchant d'une part dans l'empreinte de la seconde demi-coquille 4, et d'autre part dans le creuset d'alimentation 17a. Le matériau de remplissage est introduit par le creuset d'alimentation 17a lors de la coulée.

Mais toute autre localisation du canal d'alimentation 17 est envisageable dans le cadre de l'invention, selon une variante non représentée.

Sur la Figure 9, les demi-coquilles 3 et 4 ont été accolées l'une à l'autre par assemblage et insertion des pions de centrage 16a et 16b dans les trous de centrage 15a et 15b, les surfaces planes 15c et 16c étant appuyées l'une sur l'autre après positionnement de l'ensemble des dents 20 dans les logements de l'empreinte de la première demi-coquille 3. On voit également la présence de deux évents 18a et 18b, ici formés verticalement en partie supérieure de la seconde demi-coquille 4.

La Figure 9 illustre une sous-étape de coulée. Ainsi, un matériau de remplissage est coulé dans le canal d'alimentation 17, selon la flèche F. Durant cette sous-étape de coulée, l'air présent dans le moule 5 est chassé par les deux évents 18a et 18b, selon les flèches respectives Fa et Fb.

Par conséquent, une prothèse dentaire 9 de mâchoire supérieure a été réalisée par moulage au sein du moule 5.

La Figure 10 représente schématiquement une vue en perspective du démoulage de la prothèse 9. La prothèse dentaire 9 comporte, par définition, une partie gencive 90 et une partie dents 91, comprenant elle-même les dents 20. Le démoulage réalisé ici est total par l'application de deux forces effectuant deux mouvements de retrait opposés, illustrées par les flèches f₁ et f₂.

La prothèse 9, une fois sortie démoulée, subit avantageusement un ponçage (aux endroits où débouchaient le canal d'alimentation et les évents), et toute étape de finition éventuelle connue de la technique.

La Figure 11 représente schématiquement une vue en perspective de deux prothèses dentaires totales 9 et 7, la prothèse de mâchoire supérieure 9 étant obtenue à l'issue de l'étape de la Figure 10, et la prothèse de mâchoire inférieure 7 étant obtenue de façon similaire. Ces deux prothèses dentaires totales 9 et 7 peuvent être fixées en mâchoire, de façon temporaire, par succion adhésive, ou par utilisation d'une pâte ou crème de fixation favorisant ce phénomène de succion adhésive.

### - Deuxième mode de réalisation de l'invention :

Les Figures 12 à 16 selon le deuxième mode de réalisation de l'invention illustrent le cas d'un procédé de fabrication d'une prothèse dentaire partielle, avec stellite 22, ici de mâchoire supérieure. Les Figures 12 à 16 représentent toutes le moule 20 une fois conçu et fabriqué par fabrication additive, avant moulage (Figures 12 à 14) et après moulage (Figures 15 et 16).

Ainsi, la Figure 12 représente schématiquement une vue en perspective et éclatée des pièces formant le moule 20 de prothèse dentaire, qui sont une demi-coquille supérieure 21 (partie gencive), une demi-coquille inférieure 23 (partie dents) obtenues après modélisation, ainsi qu'un stellite 22. La demi-coquille inférieure 23 est représentée sur la Figure 13 selon une vue en perspective légèrement différente, ce qui permet de mieux appréhender sa forme. Le stellite 22 a été conçu, comme connu de l'homme du métier, à partir de l'étape de prise d'empreinte.

L'étape de prise d'empreinte a été réalisée par scannage direct en bouche par des scanner intra-oraux, ou par scannage direct sur la prise d'empreinte réalisée, par exemple, avec de l'alginate, le modèle en plâtre qui en a été issu, ou encore par scannage. Il est alors possible de modéliser le modèle virtuel (en CAO) du stellite, de la partie gencive et de la partie dents, par exemple par le logiciel Dental wings®.

Le moule 20 est formé de ces trois pièces 21, 22 et 23.

La demi-coquille inférieure 23 correspond à la partie dents de la prothèse à réaliser et comprend l'empreinte de la partie dents à réaliser (ici deux empreintes 23a et 23c) soutenues par au moins un organe support 23b, ici constitué de différentes plaques de soutien et de différents piliers de soutien, ledit organe support 23b étant de préférence soutenu, ce qui est le cas ici, par une plaque support 23d.

Le stellite 22 est formé d'une seule pièce, métallique, qui comprend deux parties de liaison 22b et 22c, correspondant respectivement aux éléments 23c et 23a de la partie dents, ainsi qu'une partie 22a destinée à s'intégrer derrière les dents encore présentes et une partie 22d destinée à s'appuyer sur le palais. Le stellite 22 est une pièce du moule, mais également une pièce de la prothèse dentaire partielle une fois celle-ci réalisée.

La demi-coquille supérieure 21 comprend la partie gencive de la prothèse dentaire, et comprend l'empreinte de la partie gencive à réaliser, ici en deux parties 21a et 21c autour de l'empreinte des dents encore présentes 21b, et une partie supérieure de soutien 21d. Si nécessaire, les dents artificielles qui seront intégrées dans la prothèse finale sont usinées, en particulier pour permettre une meilleure fixation, via par exemple un orifice permettant un passage partiel, du stellite. Le stellite est en métal chrome cobalt, tel qu'il est connu de la technique.

La demi-coquille supérieure 21, qui correspond à l'empreinte dentaire de la mâchoire supérieure du patient, peut être réalisée en moule de plâtre et, dans ce cas-là, être pleine. Elle est cependant, de préférence, réalisée par fabrication additive.

La demi-coquille inférieure 23 a été fabriquée par fabrication additive. Les éléments 23c et 23a sont destinés à former la prothèse partielle proprement dite, en combinaison avec la partie gencive 21c et 21a correspondante de la demi-coquille supérieure 21, tout en intégrant les parties 22b et 22c du stellite 22.

L'organe de positionnement comprend ainsi au moins un organe support 23b destiné à supporter l'empreinte des dents existantes 21b. Ainsi réalisé, l'organe de positionnement consiste essentiellement en la complémentarité de l'empreinte de la partie gencive (21a, 21c) et des dents existantes 21b de la demi-coquille supérieure 21 et de l'empreinte de la partie dents (23a, 23c) et de l'organe de support 23b de la demi-coquille inférieure 23. L'organe de positionnement est de préférence, ce qui est le cas ici, complété par le stellite 22 de façon à assurer l'étanchéité du moule. Cela est particulièrement avantageux lors de la coulée du composé de remplissage.

La Figure 14 représente schématiquement une vue en perspective du moule de prothèse dentaire des Figures 12 et 13, après la fixation du stellite 22 sur la demi-coquille inférieure 23, aux emplacements prévus à cet effet des éléments 23a, 23c, et des piliers 23b.

Les piliers 23b comportent des emplacements pour recevoir le stellite 22. Ils sont des éléments représentés ici en éléments pleins, principalement pour simplifier la représentation. Cependant, il est préféré dans le cadre de l'invention de prévoir des piliers creux de façon à économiser de la matière de fabrication additive, qui est le matériau de remplissage.

Les Figures 15 et 16 représentent schématiquement deux vues en perspective du moule après assemblage, complémentaires.

On y voit le moule 20 assemblé, et constitué de la demi-coquille supérieure 21, du stellite 22, et de la demi-coquille inférieure 23. L'alimentation du matériau de remplissage est effectuée par des trous de coulée (non représentées) dans le moule à hauteur des éléments 23a et 23c de la demi-coquille inférieure, le moule 20 comportant en outre éventuellement au moins un évent (non représenté). Ce moule permet avantageusement de réaliser une prothèse selon l'invention, comme il a été explicité précédemment pour le premier mode de réalisation.

### - Troisième mode de réalisation de l'invention, selon un aspect non revendiqué :

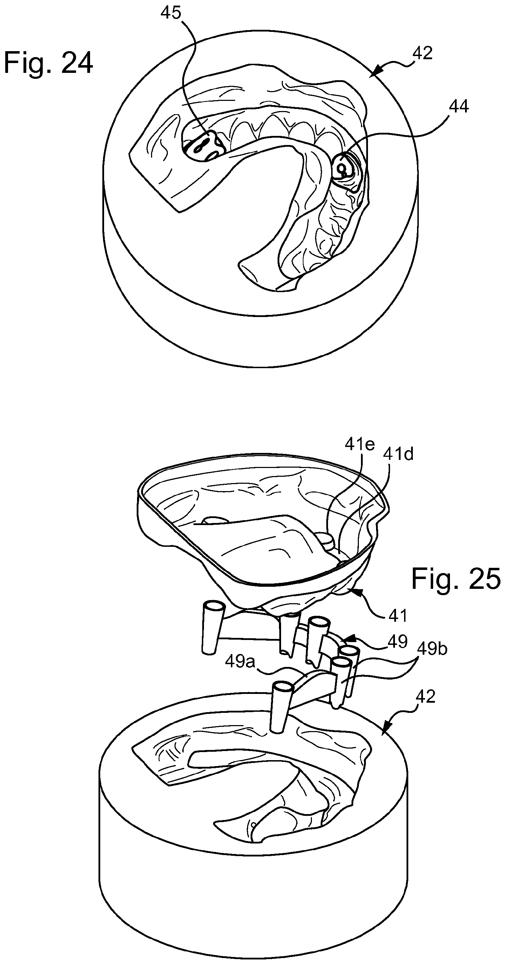

Les Figures 17 à 28 selon le troisième mode de réalisation de l'invention illustrent le cas d'un procédé de fabrication d'une prothèse dentaire totale, ici de mâchoire supérieure, comprenant une barre de soutien 49 destinée à fixer la prothèse en bouche par coopération avec six implants présents dans la mâchoire. Les Figures 17 à 23 représentent des phases de conception assistée par ordinateur, qui génère des modèles, tandis que les Figures 24 à 28 représentent des phases de fabrication effective proprement dite, comprenant la réalisation effective par fabrication additive du moule puis la réalisation effective de la prothèse dentaire grâce au moule.

La barre de soutien 49 est réalisée en fabrication additive. Elle aurait pu également être réalisée par coulée en cire perdue.

La Figure 17 représente schématiquement une vue en perspective d'une première pièce 37 (partie gencive) d'un modèle de prothèse dentaire, réalisée à partir de l'étape de prise d'empreinte. La partie supérieure 37 comporte une partie correspondant à la gencive 37a, une partie correspondant au palais 37b, ainsi qu'une partie périphérique 37c.

La Figure 18 représente schématiquement une vue en perspective d'une deuxième pièce (barre de soutien 36) du modèle de moule de prothèse dentaire de la Figure 17. La barre de soutien 36 comporte une partie principale semi-circulaire 36a, et six différents piliers de maintien 36b, la partie centrale 36a s'appuyant sur ces piliers 36b, destinés à être mis en relation par la suite avec les six implants du patient. Elle est creuse et correspond à la barre de soutien 49 telle qu'elle sera finalement réalisée.

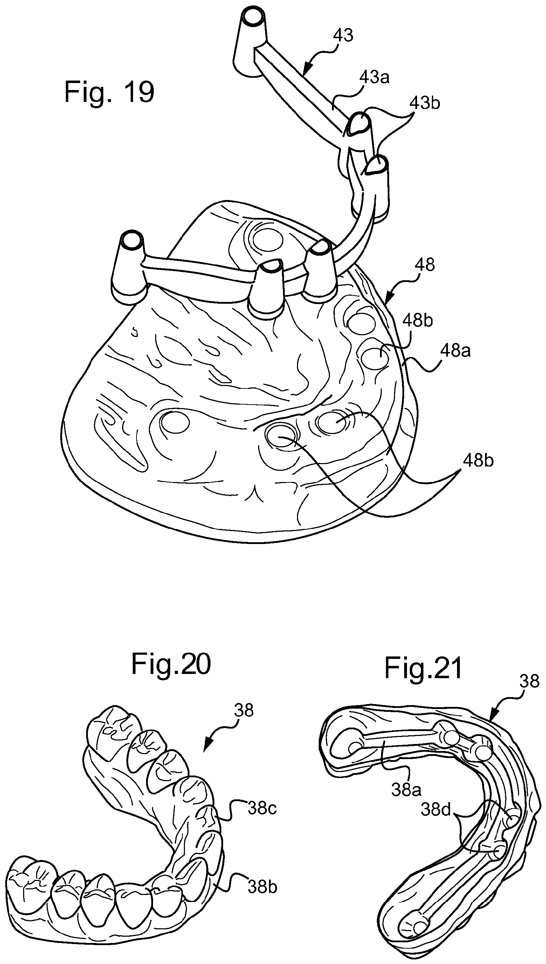

La Figure 19 représente schématiquement une vue en perspective de la première pièce et de la deuxième pièce du modèle de moule de prothèse dentaire, retravaillées par CAO. Ainsi, la barre de soutien 36 a été retravaillée en barre de soutien 43, qui est un modèle plein (par opposition au modèle creux de la Figure 18), de façon à pouvoir retravailler la pièce 37 (partie gencive) en pièce 48. La barre de soutien 43 comporte une partie principale semi-circulaire 43a, et six différents piliers de maintien 43b, la partie centrale 43a s'appuyant sur ces piliers 43b, destinés à être mis en relation par la suite avec les six implants du patient. La pièce 48 comprend une partie gencive 48a proprement dite, dans laquelle ont été créés six parties creusées ou plateformes de logement 48b destiné à permettre le positionnement de la pièce 43, et correspondant aux empreintes des six piliers 43b en leurs bases destinées à faire face à la pièce 48. La pièce 48 doit encore être retravaillée pour comprendre une partie creusée correspondant à une partie principale de barre de soutien. Cela permet le positionnement ultérieur de la barre de soutien par rapport à la partie gencive, à la fois dans le moule puis dans la prothèse.

La Figure 20 représente schématiquement une perspective en vue de dessus d'une troisième pièce 38 (partie dents) du modèle de moule de prothèse dentaire des Figures 17 à 19. La pièce 38 est pleine. Elle comprend une partie dents 38c et une partie gencive 38b.

La Figure 21 représente schématiquement une perspective en vue de dessous de la troisième pièce 38 de la Figure 20 retravaillée. Comme expliqué précédemment, la barre de soutien 43 est un modèle plein (par opposition au modèle creux de la Figure 18), de façon à pouvoir retravailler la pièce 38 (partie dents) La pièce 38 comprend une partie creusée 38a correspondant à un logement de la partie inférieure de la partie principale 43a de la barre de soutien 43, et six parties creusées 38d ou plateformes de logement correspondant aux six piliers 43b. Cela permet le positionnement ultérieur de la barre de soutien par rapport à la partie dents dans le moule.

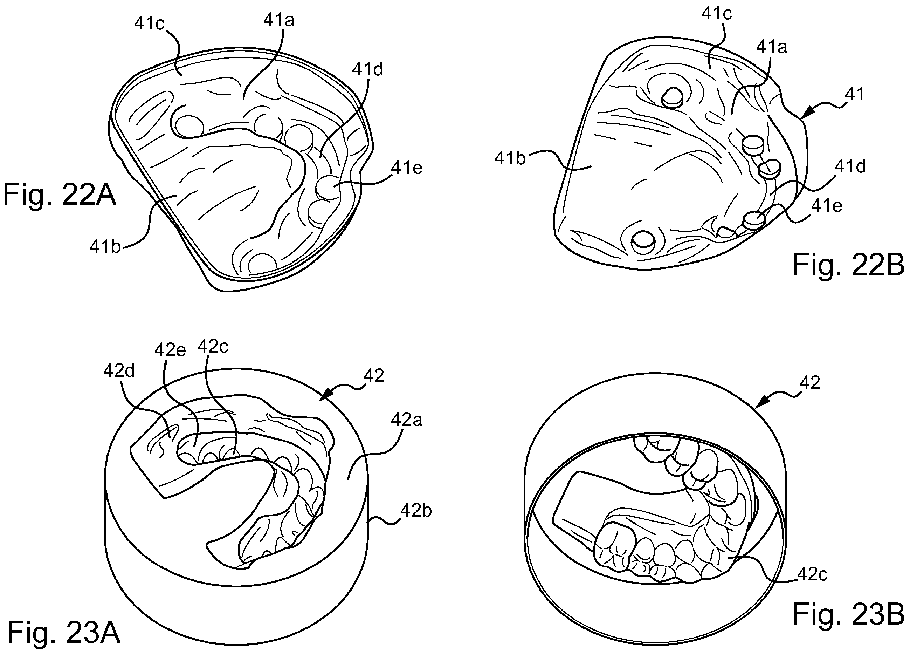

La Figure 22 représente schématiquement une vue en perspective du dessus (Figure 22A) et du dessous (Figure 22B) d'une demi-coquille supérieure 41 de moule, creuse, correspondant à la partie gencive 48, réalisée par fabrication additive à partir du modèle de pièce de la Figure 19. La surface extérieure de la partie gencive 48 de la Figure 19 correspond en tous points à la surface intérieure de la demi-coquille 41.

L'épaisseur de la demi-coquille supérieure 41 est quasi constante et permet une économie de matière particulièrement avantageuse.

On distingue une partie gencive 41a proprement dite, une partie palais 41b, une partie rebord 41c, une partie 41d correspondant à une plateforme de logement de la partie supérieure de la partie principale 49a de la barre de soutien 49, et une partie 41e correspondant à une plateforme de logement de la partie supérieure des piliers 49b de la barre de soutien 49.

La Figure 23 représente schématiquement une vue en perspective du dessus (Figure 23A) et du dessous (Figure 23B) d'une demi-coquille inférieure 42 de moule, creuse, correspondant à la partie dents 47 réalisée par fabrication additive à partir du modèle de demi-coquille des Figures 20 et 21. La surface extérieure de la partie dents 47 de la Figure 20 correspond en tous points à la surface intérieure de la demi-coquille 42.

L'épaisseur de la demi-coquille inférieure 42 est quasi constante et permet une économie de matière particulièrement avantageuse.

On distingue une partie gencive 42e, une partie dents 42c, une partie rebord 42d, une partie supérieure sensiblement plane 42a et une partie 42b latérale périphérique circulaire. Les parties 42a et 42b permettront avantageusement de rigidifier la partie basse du moule une fois celui-ci réalisé par fabrication additive.

La Figure 24 représente schématiquement une vue en perspective du dessus de la demi-coquille inférieure 42 de la Figure 23 lors de la sous-étape de fourniture d'une dent artificielle 45 ainsi que lors de la sous-étape de positionnement d'une autre dent artificielle 44. Sur cette Figure, on voit que la dent artificielle 45 a déjà été positionnée, tandis que la dent artificielle 44 est en cours de positionnement. Les dents artificielles 44 et 45 comportent chacune des orifices de passage de vis qui ont été usinés au préalable dans celles-ci. Ces orifices permettent la fixation, avant remplissage, des piliers de la barre de soutien 49 dans les dents artificielles. Il est procédé de cette façon autant de fois que nécessaire pour fournir l'ensemble des six dents artificielles.

La Figure 25 représente schématiquement une vue en perspective et éclatée de l'assemblage du moule formé des demi-coquilles supérieure 41 et inférieure 42 des Figures 22 et 23 et d'une barre de soutien (stellite) 49 correspondant à la barre de soutien modélisée (36, 43) des Figures 19 et 20. Toutes les dents artificielles ont été au préalable placées dans la demi-coquille inférieure 42. Comme expliqué ci-dessus, la barre de soutien 49 est fixée, à hauteur de chacun des piliers 49b dans les orifices des dents artificielles 44, 45..., puis la demi-coquille supérieure 41 obture l'ensemble. La barre de soutien 49 sera ultérieurement fixée par rétention due à la résine à l'intérieur de la prothèse 45.

La barre de soutien 49 est destinée à être intercalée entre les deux demi-coquilles (41, 42) lors de l'assemblage, la barre de soutien 49 comportant au moins deux piliers de maintien 49b et une partie principale semi-circulaire 49a s'appuyant sur ces piliers, la barre de soutien 49 étant destinée à être positionnée sur la demi-coquille inférieure 42 par au moins un moyen de fixation d'au moins un pilier 49b sur au moins une dent artificielle 44 logée dans la partie dents de ladite demi-coquille inférieure 42, et la barre de soutien 49 étant destiné à être positionnée sur la demi-coquille supérieure 41 par au moins une plateforme de logement de la partie supérieure des piliers.

Ainsi, l'organe de positionnement est formé par la complémentarité de l'empreinte de la partie dents de la demi-coquille inférieure 42 et de l'empreinte de la partie gencive de la demi-coquille supérieure 41. De préférence, l'organe de positionnement consiste en la complémentarité de l'empreinte de la partie dents de la demi-coquille inférieure 42 et de l'empreinte de la partie gencive de la demi-coquille supérieure 41.

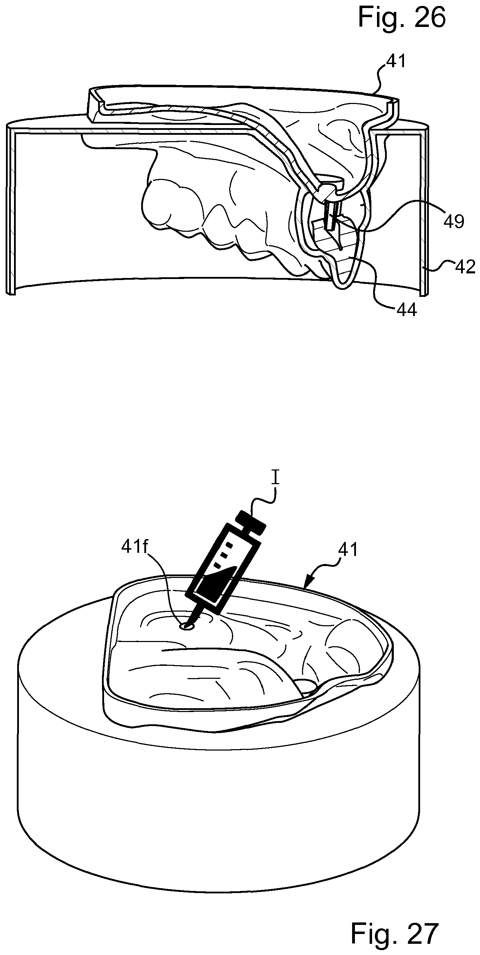

La Figure 26 représente schématiquement une vue en coupe transversale du moule après avoir accolé les deux demi-coquilles 41 et 42 l'une à l'autre par assemblage. On distingue la demi-coquille supérieure 41, la demi-coquille inférieure 42, la barre de soutien 49 et une dent artificielle 44. On voit que la barre de soutien 49 est vissée à la dent artificielle 44 à hauteur d'un de ses piliers.

La Figure 27 représente schématiquement une vue en perspective du moule après assemblage, et avant coulage du matériau d'assemblage. On y voit l'injection symbolisée par une seringue remplie partiellement de matériau de remplissage, ainsi qu'un trou de coulée 41f pour l'alimentation en matériau de remplissage. Un seul trou de coulée 41f a été symbolisé. Selon l'invention, plusieurs trous de coulée peuvent être présents. Le (ou les) trou(s) 41f peu(ven)t avoir été usiné(s) dans la demi-coquille inférieure 42 juste avant l'assemblage du moule, comme il est représenté symboliquement ici, ou bien avoir été prévu(s) dans la demi-coquille du moule dès sa modélisation. Selon une variante préférée, le trou de coulée est complété par au moins un évent.

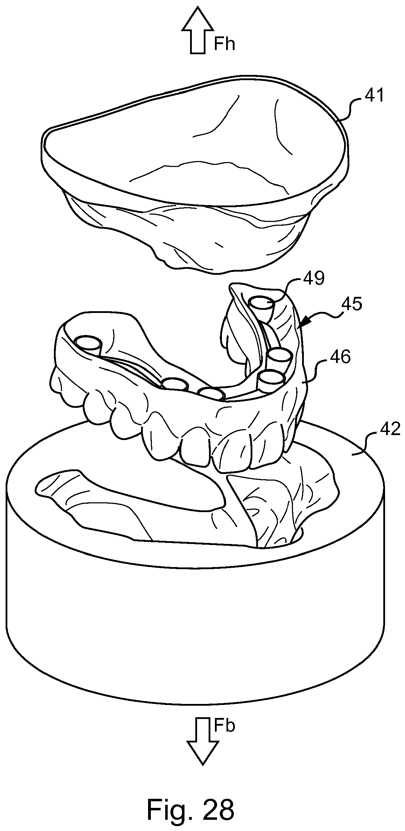

La Figure 28 représente schématiquement une vue en perspective du démoulage d'une prothèse 45 ainsi obtenue après coulage du matériau de remplissage dans le moule (41, 49, 42). Le démoulage est réalisé par l'application de deux forces effectuant deux mouvements de retrait opposés, illustrées par les flèches Fh et Fb. La prothèse 45 est composée d'une résine solidifiée 46 autour de dents artificielles et de la barre de soutien 49. Les piliers de la barre de soutien permettront le positionnement de la prothèse 45 dans la mâchoire du patient par l'intermédiaire d'implants. Ces implants seront ainsi solidarisés à la prothèse 45.

## Revendications

1. Procédé de fabrication d'une prothèse dentaire partielle amovible par moulage, ledit procédé comprenant les étapes successives suivantes :
- une étape de modélisation numérique d'un modèle de prothèse partielle (10' ; 43, 48, 38), le modèle de prothèse partielle représentant la prothèse partielle à réaliser et comportant une partie gencive (12' ; 48) et une partie dents (13' ; 38) ;
- une étape de réalisation d'un moule (5 ; 20 ; 41 ; 42) de prothèse partielle à partir du modèle de prothèse partielle, ledit moule comprenant deux demi-coquilles, une demi-coquille inférieure (3 ; 23 ; 42) comportant une empreinte de la partie dents de la prothèse à réaliser, et une demi-coquille supérieure (4; 21 ; 41) comportant une empreinte de la partie gencive de la prothèse à réaliser et une empreinte (21b) de dents existantes, la partie gencive et la partie dents de la prothèse à réaliser étant chacune partielles, les deux demi-coquilles (21 ; 23) étant configurées pour être assemblées par accolement l'une à l'autre, les empreintes de chaque demi-coquille formant par assemblage une empreinte (9) de la prothèse à réaliser, le moule comprenant au moins un organe de positionnement d'une demi-coquille par rapport à l'autre demi-coquille, l'organe de positionnement comprenant au moins un organe support (23b), formé dans la demi-coquille inférieure (23), destiné à supporter l'empreinte de dents existantes (21b) de la demi-coquille supérieure (21), l'organe de positionnement consistant en une complémentarité de l'empreinte de la partie gencive (21a, 21c) et des dents existantes (21b) de la demi-coquille supérieure (21) et de l'empreinte de la partie dents (23a, 23c) et de l'organe de support (23b) de la demi-coquille inférieure (23) ;
l'étape de réalisation d'un moule (20) comprenant :
- une sous-étape de modélisation numérique au moins partielle d'un modèle de moule en fonction du modèle de prothèse partielle,
- suivie d'une sous-étape de fabrication additive d'au moins la demi-coquille inférieure (23) en fonction du modèle de moule, et
- une étape de réalisation de la prothèse partielle comprenant successivement au moins : une sous-étape de fourniture d'au moins une dent artificielle (44 ; 45), une sous-étape de positionnement de la dent artificielle dans un logement de la demi-coquille inférieure (3 ; 23 ; 42), une sous-étape d'assemblage du moule (20) et une sous-étape de coulée d'un matériau de remplissage dans le moule (20).

2. Procédé de fabrication selon la revendication 1, tel que la sous-étape de fabrication additive du moule (20) est réalisée par photopolymérisation.

3. Procédé de fabrication selon l'une des revendications 1 et 2, tel que la sous-étape de fabrication additive du moule (20) est réalisée par un procédé comprenant une succession d'ajouts de matériau par jets sur un support d'impression, en couches successives, le polymère étant solidifié par photopolymérisation après chaque jet.

4. Procédé de fabrication selon l'une des revendications 1 à 3, tel que le matériau de fabrication additive est choisi dans le groupe formé par les monomères acryliques, les monomères époxydes, et l'acrylonitrile butadiène styrène (ABS), de préférence le matériau de fabrication additive est un monomère acrylique.

5. Procédé de fabrication selon l'une des revendications 1 à 3, tel que le matériau de fabrication additive est choisi dans le groupe formé par les polymères acide polylactique (PLA), alcool polyvinylique (PVA), acrylonitrile budadiène styrène (ABS) et téréphtalate d'éthylène (PET).

6. Procédé de fabrication selon l'une des revendications 1 à 5, tel que le matériau de remplissage est un monomère acrylique.

7. Procédé de fabrication selon l'une des revendications 1 à 6, tel que l'organe de positionnement est complété par un stellite (22) de façon à assurer l'étanchéité du moule (20).

8. Procédé de fabrication selon l'une des revendications 1 à 7, tel que l'étape de réalisation effective de la prothèse est précédée d'une étape de prise d'empreinte.

9. Procédé de fabrication selon l'une des revendications 1 à 8 tel que l'étape de réalisation effective de la prothèse est suivie d'au moins une étape de démoulage et/ou de finition.

## Patentansprüche

1. Verfahren zur Herstellung einer herausnehmbaren partiellen Zahnersatzes durch Formung, wobei das Verfahren die folgenden aufeinanderfolgenden Schritte umfasst:
- einen Schritt des digitalen Modellierens eines Modells des partiellen Zahnersatzes (10'; 43, 48, 38), wobei das Modell des partiellen Zahnersatzes den herzustellenden partiellen Zahnersatz darstellt und einen Zahnfleischteil (12'; 48) und einen Zahnteil (13'; 38) umfasst;
- einen Schritt der Herstellung einer Form (5; 20; 41; 42) des partiellen Zahnersatzes ausgehend von dem Modell des partiellen Zahnersatzes, wobei die Form zwei Halbschalen umfasst, eine untere Halbschale (3; 23; 42), die einen Abdruck des Zahnteils des herzustellenden Zahnersatzes umfasst, und eine obere Halbschale (4; 21; 41), die einen Abdruck des Zahnfleischteils des herzustellenden Zahnersatzes und einen Abdruck (21b) der vorhandenen Zähne umfasst, wobei der Zahnfleischteil und der Zahnteil des herzustellenden Zahnersatzes jeweils partiell sind, wobei die beiden Halbschalen (21; 23) so gestaltet sind, dass sie durch Aneinanderfügen zusammengefügt werden können, wobei die Abdrücke jeder Halbschale durch Zusammenfügen einen Abdruck (9) des herzustellenden Zahnersatzes bilden, wobei die Form mindestens ein Element zur Positionierung einer Halbschale in Bezug auf die andere Halbschale umfasst, wobei das Positionierungselement mindestens ein Stützelement (23b) umfasst, das in der unteren Halbschale (23) ausgebildet ist und dazu bestimmt ist, den Abdruck der vorhandenen Zähne (21b) der oberen Halbschale (21) zu stützen, wobei das Positionierungselement aus einer Komplementarität des Abdrucks des Zahnfleischteils (21a, 21c) und der vorhandenen Zähne (21b) der oberen Halbschale (21) und des Abdrucks des Zahnteils (23a, 23c) und des Stützelements (23b) der unteren Halbschale (23) besteht;
wobei der Schritt der Herstellung einer Form (20) Folgendes umfasst:
- einen Teilschritt der zumindest teilweisen digitalen Modellierung eines Formmodells entsprechend dem Modell des partiellen Zahnersatzes,
- gefolgt von einem Teilschritt der additiven Herstellung zumindest der unteren Halbschale (23) entsprechend dem Formmodell, und
- einen Schritt zur Herstellung des partiellen Zahnersatzes, der nacheinander mindestens Folgendes umfasst: einen Teilschritt zum Bereitstellen mindestens eines künstlichen Zahns (44; 45), einen Teilschritt zum Positionieren des künstlichen Zahns in einer Aufnahme der unteren Halbschale (3; 23; 42), einen Teilschritt zum Zusammensetzen der Form (20) und einen Teilschritt zum Gießen eines Füllmaterials in die Form (20).

2. Verfahren zur Herstellung nach Anspruch 1, wobei der Teilschritt der additiven Herstellung der Form (20) durch Photopolymerisation durchgeführt wird.

3. Verfahren zur Herstellung nach einem der Ansprüche 1 und 2, wobei der Teilschritt der additiven Herstellung der Form (20) durch ein Verfahren durchgeführt wird, das eine Abfolge von Materialzugaben durch Strahlen auf einen Druckträger in aufeinanderfolgenden Schichten umfasst, wobei das Polymer nach jedem Strahl durch Photopolymerisation verfestigt wird.

4. Verfahren zur Herstellung nach einem der Ansprüche 1 bis 3, wobei das additive Herstellungsmaterial ausgewählt wird aus der Gruppe bestehend aus Acrylmonomeren, Epoxidmonomeren und Acrylnitril-Butadien-Styrol (ABS), vorzugsweise ist das additive Herstellungsmaterial ein Acrylmonomer.

5. Verfahren zur Herstellung nach einem der Ansprüche 1 bis 3, wobei das additive Herstellungsmaterial ausgewählt wird aus der Gruppe bestehend aus Polymilchsäure (PLA), Polyvinylalkohol (PVA), Acrylnitril-Budadien-Styrol (ABS) und Ethylenterephthalat (PET).

6. Verfahren zur Herstellung nach einem der Ansprüche 1 bis 5, wobei das Füllmaterial ein Acrylmonomer ist.

7. Verfahren zur Herstellung nach einem der Ansprüche 1 bis 6, wobei das Positionierungselement durch ein Stellit (22) ergänzt wird, um die Dichtigkeit der Form (20) zu gewährleisten.

8. Verfahren zur Herstellung nach einem der Ansprüche 1 bis 7, wobei dem Schritt der eigentlichen Herstellung des Zahnersatzes ein Schritt der Abdrucknahme vorausgeht.

9. Verfahren zur Herstellung nach einem der Ansprüche 1 bis 8, wobei sich an den Schritt der eigentlichen Herstellung des Zahnersatzes mindestens ein Schritt der Entformung und/oder Endbearbeitung anschließt.

## Claims

1. A method for manufacture of a removable dental partial prosthesis (9) by moulding, said method comprising the following successive steps:
- a step of digital modeling of a partial prosthesis model (10' ; 43, 48, 38), the partial prosthesis model representing the partial prosthesis to produce and comprising a gum part (12' ; 48) and a tooth part (13' ; 38);
- a step of producing a partial prosthesis mould (5 ; 20 ; 41 ; 42) from the partial prosthesis model, said mould comprising two half-shells, a lower half-shell (3 ; 23 ; 42) comprising an imprint of the tooth part of the prosthesis to produce, and an upper half-shell (4 ; 21 ; 41) comprising an imprint of the gum part of the prosthesis to produce and an imprint of existing teeth (21b), the gum part and the teeth part of the prosthesis to produce being partial, the two half-shells (21, 23) being configured to be assembled by juxtaposition against each other, the imprints of each half-shell forming by assembly an imprint (9) of the prosthesis to produce, the mould comprising at least one positioning member of one half-shell relative to the other half-shell, the positioning member comprising at least one support member (23b), formed in the lower half-shell (23), for supporting the imprint of the existing teeth (21b) of the upper half-shell (21), the positioning member consisting in a complementarity of the imprint of the gum part (21a, 21c) and the existing teeth (21b) of the upper half-shell (21) and the imprint of the teeth part (23a, 23c) and of the support member (23b) of the lower half-shell (23);
the step of producing a mould comprising:
- a sub-step of digital modeling at least partial of a mould model according to the partial prosthesis model,
- followed by a sub-step of additive manufacture of at least the lower half-shell (23) according to the mould model, and
- a step of producing the partial prosthesis successively comprising at least: a sub-step of providing at least one artificial tooth (44; 45), a sub-step of positioning the artificial tooth in an accommodation of the lower half-shell (3 ; 23 ; 42), a sub-step of assembling the mould (20) and a sub-step of casting a filling material in the mould (20).

2. Method for manufacture according to claim 1, such that the sub-step of additive manufacture of the mould (20) is carried out by photopolymerisation.

3. Method for manufacture according to anyone of claims 1 and 2, such that the sub-step of additive manufacture of the mould (20) is carried out by a method comprising a succession of additions of material by jets on a printing substrate, layerwise, the polymer being solidified by photopolymerisation after each jet.

4. Method for manufacture according to anyone of claims 1 to 3, such that the additive manufacture material is chosen from the group formed by acrylic monomers, epoxide monomers, and acrylonitrile butadiene styrene (ABS), preferably the additive manufacture material is an acrylic monomer.

5. Method for manufacture according to anyone of claims 1 to 3, such that the additive manufacture material is chosen from the group formed by polylactic acid polymers (PLA), polyvinyl alcohol (PVA), acrylonitrile butadiene styrene (ABS), and ethylene terephthalate (PET).

6. Method for manufacture according to anyone of claims 1 to 5, such that the filling material is an acrylic monomer.

7. Method for manufacture according to anyone of claims 1 to 6, such that the positioning member is completed by a stellite (22) so as to provide sealing of the mould (20).

8. Method for manufacture according to anyone of claims 1 to 7, such that the step of actual production of the prosthesis is preceded by a step of taking an imprint.

9. Method for manufacture according to anyone of claims 1 to 8, such that the step of actual production of the prosthesis is followed by at least one step of removal from the mould and/or finishing.
